# EUROPEAN PATENT APPLICATION

(11) **EP 3 451 265 A1**
(43) Date of publication of application: **06.03.2019**
(21) Application number: 17788579.5
(22) Date of filing: 24.03.2017
(51) Int. Cl.: G06Q 20/42, G06Q 20/32

(54) **MOBILE PAYMENT METHOD AND APPARATUS**

(30) Priority: 27.04.2016 CN 201610270230
(71) Applicant: China Unionpay Co., Ltd, Shanghai 200135 (CN)
(72) Inventor: CHEN, Chengqian, Shanghai 200135 (CN); ZHOU, Yu, Shanghai 200135 (CN); GUO, Wei, Shanghai 200135 (CN)
(74) Representative: Seemann & Partner Patentanwälte mbB
(86) International application number: PCT/CN2017/077989
(87) International publication number: WO 2017/185926

(57) **Abstract**

The present disclosure relates to a mobile payment method and device based on a near field communication function, which can seamlessly switch between a fingerprint verification mode and a non-fingerprint verification mode. The mobile payment method according to the present disclosure includes the following steps: executing a non-contact protocol initialization process between a mobile payment terminal and an external device by the mobile payment terminal; receiving a selection command from the external device by the mobile payment terminal, the selection command designating a non-contact application; determining, by the mobile payment terminal, whether the designated non-contact application supports a fingerprint verification mode; determining, by the mobile payment terminal, whether the designated non-contact application has passed the fingerprint verification, if the fingerprint verification mode is supported; and running the designated non-contact application by the mobile payment terminal to execute a payment operation, if the designated non-contact application has passed fingerprint verification or does not support the fingerprint verification mode, wherein the execution of the non-contact protocol initialization process is independent of the execution of the fingerprint verification process.

## Description

### FIELD OF THE INVENTION

The present disclosure relates to mobile payment technology, and in particular to a mobile payment method and device based on a near field communication function, which can seamlessly switch between a fingerprint verification mode and a non-fingerprint verification mode.

### BACKGROUND

With the wide application of near field communication (NFC) function, fingerprint verification and embedded security element (eSE) on mobile phones, the mobile payment methods combining these three functions are becoming more and more popular in the market. A typical representative is the Apple Pay of Apple Inc. In this fingerprint payment mode, fingerprint verification can ensure that the current cardholder is a legitimate cardholder, thereby protecting the security when the cardholder swipes the card.

The above mobile payment methods are user-friendly for non-contact applications that require fingerprint verification. However, there are deficiencies when it comes to non-contact application scenes that support both security verification and non-security verification. For example, in addition to supporting non-contact payment with bank cards, mobile phones usually support bus card applications. Bank card payment requires secure protection mechanisms such as fingerprint verification for security reasons, thereby sacrificing the processing speed to a certain extent is acceptable to the user; while for bus card applications, due to the frequency of use, the rapidity in swiping the card and the small amount of money, the provision of secure protection mechanism will decrease the speed of card swiping, thereby greatly affecting the user experience.

It can be seen from the above that there is an urgent need to provide a mobile payment technology on a mobile phone, which can be simultaneously adapted to the characteristics of the above two types of application scenes.

### SUMMARY OF THE INVENTION

The present disclosure provides a mobile payment method and device based on near field communication function, which can be simultaneously adapted to mobile payment scenes under a secure protection mechanism and an insecure protection mechanism, and can realize seamless switch between the two, thus providing good user experience.

According to an aspect of the present disclosure, a mobile payment method is provided, including the following steps:

executing a non-contact protocol initialization process between a mobile payment terminal and an external device by the mobile payment terminal;

receiving a selection command from the external device by the mobile payment terminal, the selection command designating a non-contact application;

determining, by the mobile payment terminal, whether the designated non-contact application supports a fingerprint verification mode;

determining, by the mobile payment terminal, whether the designated non-contact application has passed the fingerprint verification, if the fingerprint verification mode is supported; and

running the designated non-contact application by the mobile payment terminal to execute a payment operation, if the designated non-contact application has passed fingerprint verification or does not support the fingerprint verification mode,

wherein the execution of the non-contact protocol initialization process is independent of the execution of the fingerprint verification process.

Preferably, in the above method, the fingerprint verification process is executed before it is determined that the designated non-contact application supports the fingerprint verification mode.

Preferably, in the above method, the fingerprint verification process is executed after it is determined that the designated non-contact application supports the fingerprint verification mode.

Preferably, in the above method, the mobile payment terminal determines whether the designated non-contact application supports the fingerprint verification mode by accessing an application registry, and the application registry saves fingerprint identification information associated with the non-contact application residing in the mobile payment terminal, the fingerprint identification information including an identifier indicating whether the non-contact application supports the fingerprint verification mode and a status flag indicating whether the fingerprint verification is passed when the fingerprint verification mode is supported.

Preferably, in the above method, the step of determining by the mobile payment terminal whether the fingerprint verification is passed includes:
a) reading the status flag;
b) if the status flag is a first set value, determining that the designated non-contact application has passed the fingerprint verification, and if the status flag is a second set value, determining that the designated non-contact application has not passed the fingerprint verification;
c) if the status flag is a third set value, executing a fingerprint verification process and repeating steps a) and b), wherein in the process of executing fingerprint verification, if the fingerprint verification is passed, the status flag is set at the first set value, otherwise it is set at the second set value; and
d) resetting the status flag at a third set value after the status flag has been set at the first set value or the second set value for a preset period of time.

According to an aspect of the present disclosure, a mobile payment terminal is also provided, including:
a near-field communication unit, configured to execute a non-contact protocol initialization process between the mobile payment terminal and an external device, and receive a selection command from the external device, the selection command designating a non-contact application running in the mobile payment terminal;
a fingerprint verification unit, configured to execute a fingerprint verification process; and
an embedded security element, which includes a fingerprint triggering module configured to:
determine whether the designated non-contact application supports a fingerprint verification mode;
determine whether the designated non-contact application has passed the fingerprint verification, if the fingerprint verification mode is supported; and
instruct running the designated non-contact application in the mobile payment terminal to execute a payment operation, if the designated non-contact application has passed fingerprint verification or does not support the fingerprint verification mode,
wherein the execution of the non-contact protocol initialization process is independent of the execution of the fingerprint verification process.

Preferably, the mobile payment terminal is a mobile phone.

Preferably, in the above mobile payment terminal, the embedded security element further includes an application registry that can be accessed by the fingerprint triggering module, wherein the application registry saves fingerprint identification information associated with the non-contact application residing in the mobile payment terminal, the fingerprint identification information including an identifier indicating whether the non-contact application supports the fingerprint verification mode and a status flag indicating whether the fingerprint verification is passed when the fingerprint verification mode is supported.

Preferably, in the above mobile payment terminal, the embedded security element further includes a fingerprint identification processing module which is configured to update the status flag in the application registry based on a result of fingerprint verification of the fingerprint verification unit.

Preferably, in the above mobile payment terminal, the fingerprint triggering module is configured to determine whether the fingerprint verification is passed in the following manner:
a) reading the status flag;
b) if the status flag is a first set value, determining that the designated non-contact application has passed the fingerprint verification, and if the status flag is a second set value, determining that the designated non-contact application has not passed the fingerprint verification;
c) if the status flag is a third set value, executing a fingerprint verification process and repeating steps a) and b), wherein in the process of executing fingerprint verification, if the fingerprint verification is passed, the status flag is set at the first set value by the fingerprint identification processing module, otherwise it is set at the second set value by the fingerprint identification processing module; and
d) resetting the status flag at a third set value by the fingerprint identification processing module after the status flag has been set at the first set value or the second set value for a preset period of time.

Preferably, in the above mobile payment terminal, the designated non-contact application runs in the embedded security element.

### BRIEF DESCRIPTION OF THE DRAWINGS

The above and/or other aspects and advantages of the present disclosure will become more clearly and easily understood from the following description in conjunction with several aspects of the accompanying drawings. In the drawings, identical or similar elements are denoted by identical reference signs, in which:
FIG. 1 is a schematic structural diagram of a mobile payment terminal according to an embodiment of the present disclosure.
FIG. 2 is a flowchart of a mobile payment method according to an embodiment of the present disclosure.
FIG. 3 is a flowchart of a mobile payment method according to another embodiment of the present disclosure.
FIG. 4 is a flowchart of a mobile payment method according to further another embodiment of the present disclosure.

### DETAILED DESCRIPTION OF THE INVENTION

The present disclosure will now be described more fully hereinafter with reference to the accompanying drawings in which the illustrative embodiments of the present disclosure are shown. However, the present disclosure may be embodied in different forms and should not be construed as being limited to the various embodiments set forth herein. The above-described embodiments are intended to make the disclosure complete and thorough so as to convey the scope of protection of the present disclosure to those skilled in the art.

The use of the terms "include" and "comprise" means that the in addition to the units and steps directly and explicitly recited in the specification and claims, the technical solutions of the present disclosure do not exclude situations including other units and steps that are not directly or explicitly recited.

According to an aspect of the present disclosure, the initialization process of the non-contact protocol of near field communication (NFC) is executed independently of the secure application mechanism such as fingerprint verification. In an embodiment, when a mobile payment terminal such as a mobile phone is close to an external device (e.g., a POS machine, a subway gate, a bus card reader, etc.), the NFC function is activated to complete the initialization process of the non-contact protocol, regardless of whether an identity verification process such as fingerprint verification has been passed. When the external device identifies the mobile payment terminal, a non-contact command is sent to the mobile payment terminal to instruct the mobile payment terminal to run a corresponding non-contact application, thereby completing the payment operation.

According to another aspect of the present disclosure, in order to distinguish a non-contact application based on a secure protection mechanism from a non-contact application based on an insecure protection mechanism, fingerprint identification information is used to indicate whether a non-contact application supports a fingerprint verification mode and whether fingerprint verification is passed when the fingerprint verification mode is supported. Preferably, the fingerprint identification information of a non-contact application includes an identifier indicating whether the non-contact application supports a fingerprint verification mode and a status flag indicating whether the fingerprint verification has been passed when the fingerprint verification mode is supported. Preferably, different values of the same parameter can be used to indicate the identifier and the status of the status flag. For example, an information byte can be used to indicate various statuses, wherein the value "0" indicates a status in which a non-contact application does not support fingerprint identification, the value "1" indicates a status in which the non-contact application supports fingerprint identification but the fingerprint verification process has not yet been executed, the value "2" indicates a status in which the non-contact application supports fingerprint identification and the fingerprint verification process is passed, and the value "3" indicates a status in which the non-contact application supports fingerprint verification and the fingerprint verification process is not passed. The fingerprint identification information can be saved in the registration information table, and the registration information table can be saved in the embedded security element (eSE) together with the non-contact application.

For a non-contact application that does not support fingerprint verification, when the eSE receives the non-contact application selection command of the external device, it will directly return the execution result of the non-contact application to the external device, thereby completing the subsequent application interaction process with the external device.

For a non-contact application that supports fingerprint verification, when the eSE receives the non-contact application selection command of the external device, if the fingerprint identification information indicates that the fingerprint verification is not passed, the eSE returns an error message indicating that the non-contact application does not exist to the external device, and the external device will not be able to select the non-contact application, so that the subsequent application interaction process cannot be completed. If the fingerprint identification information indicates that the fingerprint verification is passed, the eSE will return the execution result of the non-contact application to the external device, and complete subsequent application interaction process with the external device. After the application interaction process is completed, the fingerprint identification information of the non-contact application is reset to be a status in which the fingerprint verification is not passed. In a specific application scene, for a non-contact application that supports fingerprint verification, the user can actively enter a fingerprint for fingerprint verification before swiping the card so as to update the fingerprint identification information of the non-contact application, or when the card is swiped close to the external device, the eSE triggers and awakens a fingerprint client on the mobile payment terminal, and the user is prompted to enter a fingerprint, thereby completing fingerprint verification of the non-contact application.

Embodiments for carrying out the present disclosure will be described below by means of the drawings.

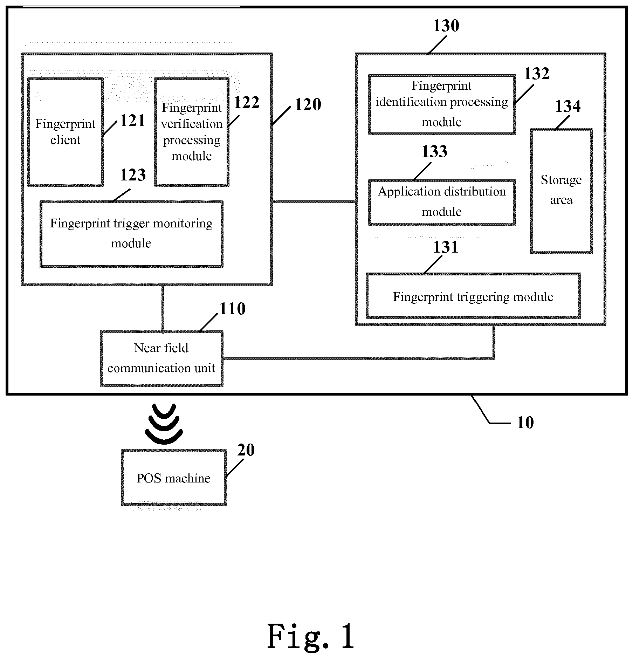

FIG. 1 is a schematic structural diagram of a mobile payment terminal according to an embodiment of the present disclosure. Illustratively, a mobile phone and a POS machine are herein taken as the examples of the mobile payment terminal and the external device respectively.

As shown in FIG. 1, a mobile phone 10, which serves as the mobile payment terminal, includes a near field communication (NFC) unit 110, a fingerprint verification unit 120 and an embedded security element 130.

The near field communication unit 110 is configured to execute a non-contact protocol initialization process between the mobile payment terminal and a POS machine 20 of the external device, receive a selection command from the POS machine, and return an execution result of the non-contact application to the POS machine, wherein the selection command designates the non-contact application running in the mobile payment terminal. Moreover, the near field communication unit 110 is further configured to couple with the fingerprint verification unit 120 to trigger the operation of the fingerprint verification unit 120, and couple with the embedded security element 130 to serve as a communication interface used in an interaction process of the non-contact application and the POS machine.

With reference to FIG. 1, the fingerprint verification unit 120 includes a fingerprint client 121, a fingerprint verification processing module 122 and a fingerprint trigger monitoring module 123.

The fingerprint client 121 is responsible for running a fingerprint entry application which is configured to, in response to a command of the fingerprint trigger monitoring module 123, activate a process of fingerprint verification processing of the fingerprint verification processing module 122 and display a prompt interface for fingerprint entry. The fingerprint verification processing module 122 is configured to verify whether the fingerprint entered by the user matches with a reference object in response to the activation command from the fingerprint client 121, and update the fingerprint identification information of the currently selected non-contact application according to the verification result. For example, as described above, if the fingerprint verification is passed, the status flag is updated from "1" to "2", and if the fingerprint verification is not passed, the status flag is updated from "1" to "3". The fingerprint verification processing module 122 transmits the updated fingerprint identification information to the embedded security element (eSE) 130. The fingerprint verification processing module 122 generally requires security protection, so it typically operates in a secure environment (e.g., TEE) provided by the mobile phone. The fingerprint trigger monitoring module 123 is configured to activate the fingerprint client 121 to execute the above operation in response to a fingerprint calling command of the embedded security element 130 monitored by the near field communication unit 110.

With continued reference to FIG. 1, the embedded security element130 includes a fingerprint triggering module 131, a fingerprint identification processing module 132, an application distribution module 133, and a storage area 134 that saves the non-contact application and application registry.

The fingerprint triggering module 131 is configured to, in response to the non-contact application selection command received from the POS machine 20 via the near field communication unit 110, determine whether the selected non-contact application supports fingerprint verification and whether fingerprint verification is passed. If the fingerprint verification is supported and the fingerprint verification has not been passed, the fingerprint triggering module 131 sends a fingerprint calling command to the fingerprint trigger monitoring module 123 via the near field communication unit 110, and the fingerprint trigger monitoring module 123 triggers the fingerprint client 121 to present a prompt for entering the fingerprint to the user, and triggers the fingerprint verification processing module 122 to verify whether the fingerprint entered by the user matches with the reference object and updates the fingerprint identification information of the currently selected non-contact application. The fingerprint identification processing module 132 is configured to, in response to a fingerprint information update command returned by the fingerprint verification processing module 122, access the storage area 134 to look up and update the fingerprint identification information of the current non-contact application in the application registry. The application distribution module 133 is configured to directly activate the corresponding non-contact application to operate inside the embedded security element, when the selected non-contact application does not support fingerprint verification. When the selected non-contact application supports fingerprint verification, if it is determined that the fingerprint verification is passed according to the fingerprint identification information, then the corresponding non-contact application is activated and runs in the embedded security element.

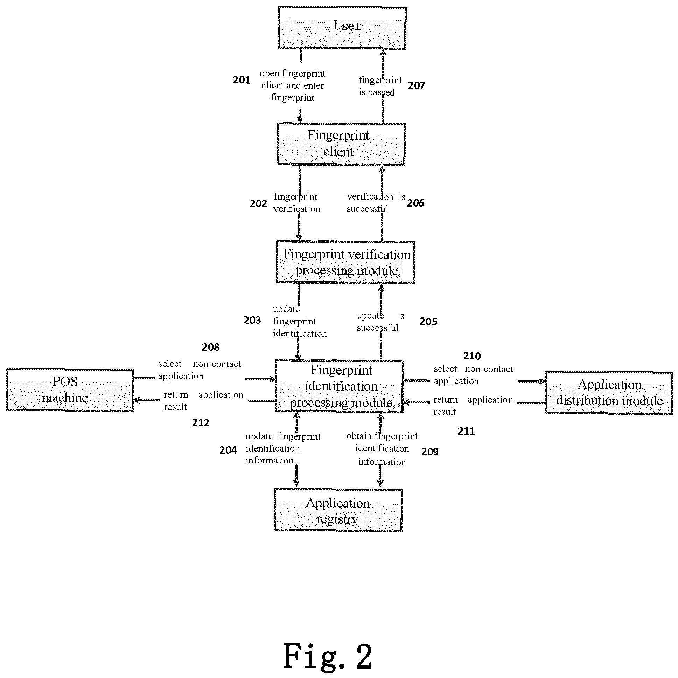

FIG. 2 is a flowchart of a mobile payment method according to an embodiment of the present disclosure. Exemplarily, in this embodiment, an application scene is involved in which the user uses a mobile phone payment application supporting fingerprint verification to swipe the card on the POS machine, and the user actively enters the fingerprint before the non-contact protocol initialization process is executed. For convenience of explanation, the mobile payment method of the present embodiment is implemented by means of the mobile payment terminal shown in FIG. 1. However, it should be noted that the method is not limited to being implemented by a device having a particular structure.

The process shown in FIG. 2 includes the following steps.

In step 201: before the card is swiped, since the non-contact application knowing that the card is to be swiped requires fingerprint verification, the user actively opens the fingerprint client 121 on the mobile phone, selects the designated non-contact application, and enters the fingerprint according to a prompt.

In step 202: the fingerprint verification processing module 122 compares the fingerprint entered by the user with a reference fingerprint in response to a command of the fingerprint client 121.

In step 203: the fingerprint verification processing module 122 updates the fingerprint identification information of the application according to the comparison result and sends a command of updating application fingerprint identification to the fingerprint identification processing module 132.

In step 204: the fingerprint identification processing module 132 updates the fingerprint identification information in the application registry of the selected non-contact application according to the received command of updating fingerprint identification.

In step 205: the fingerprint identification processing module 132 returns a message indicating that the update was successful to the fingerprint verification processing module 122.

In step 206: if the fingerprint verification is passed, the fingerprint verification processing module 122 returns a message indicating that the fingerprint verification is passed to the fingerprint client 121.

In step 207: the fingerprint client 121 prompts the user to take the mobile phone to swipe the card on the POS machine.

In step 208: the fingerprint identification processing module 132 receives a non-contact application selection command sent by the POS machine via the near field communication unit.

In step 209: the fingerprint identification processing module 132 obtains fingerprint identification information of the application from the application registry.

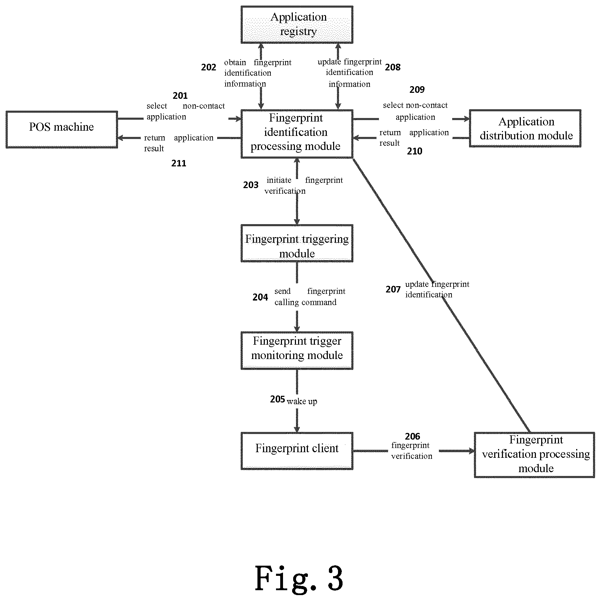

In step 210: the fingerprint identification processing module 132 determines the processing manner of the next step according to the fingerprint identification information. Specifically, in a case where the selected non-contact application has passed fingerprint verification and the selected non-contact application does not support fingerprint verification, the fingerprint identification processing module 132 forwards the non-contact application selection command to the application distribution module 133; in a case where fingerprint verification has not yet been conducted for the selected non-contact application, the fingerprint identification processing module 132 instructs the fingerprint triggering module 131 to initiate a fingerprint verification process, which will be described in detail below with reference to FIG. 3; and in a case where the selected non-contact application has not passed fingerprint verification, the fingerprint identification processing module 132 will prevent the non-contact application selection command from being forwarded to the application distribution module 133. In the present embodiment, since the previous fingerprint verification was passed, the fingerprint identification processing module 132 forwards the non-contact application selection command to the application distribution module 133.

In step 211: the application distribution module 133 selects the designated application to run in the embedded security element 130 according to the non-contact application selection command, and returns a message indicating that the application selection was successful to the fingerprint identification processing module 132.

In step 212: the fingerprint identification processing module 132 forwards the message indicating that the application selection was successful to the POS machine so that the POS machine executes a subsequent application interaction command with the non-contact application running on the embedded security element 130, thereby completing the payment process of the user swiping the card.

FIG. 3 is a flowchart of a mobile payment method according to another embodiment of the present disclosure. Exemplarily, in this embodiment, an application scene is involved in which the user uses a mobile phone payment application supporting fingerprint verification to swipe the card on the POS machine, and the user actively enters the fingerprint after the non-contact protocol initialization process is executed. For convenience of explanation, the mobile payment method of the present embodiment is implemented by means of the mobile payment terminal shown in FIG. 1. However, it should be noted that the method is not limited to being implemented by a device having a particular structure.

The process shown in FIG. 3 includes the following steps.

In step 301: the fingerprint identification processing module 132 receives a non-contact application selection command sent by the POS machine via the near field communication unit.

In step 302: the fingerprint identification processing module 132 obtains fingerprint identification information of the application from the application registry.

In step 303: the fingerprint identification processing module 132 determines the processing manner of the next step according to the fingerprint identification information. In this embodiment, since the selected non-contact application supports fingerprint verification but has not yet performed fingerprint verification, the fingerprint identification processing module 132 sends an instruction to the fingerprint triggering module 131 to start the fingerprint verification process.

In step 304: the fingerprint triggering module 131 sends the instruction to start the fingerprint verification process to the fingerprint trigger monitoring module 123 via the near field communication unit 110.

In step 305: the fingerprint trigger monitoring module 123 wakes up the fingerprint client 121, and instructs the fingerprint client 121 to start the fingerprint verification process.

In step 306: the fingerprint client 121 prompts for entry of the fingerprint and activates the fingerprint verification processing module 122.

In step 307: the fingerprint verification processing module 122 compares the fingerprint entered by the user with a reference fingerprint in response to the command of the fingerprint client 121, updates the fingerprint identification information of the application according to the comparison result, and sends a command of updating application fingerprint identification to the fingerprint identification processing module 132.

In step 308: the fingerprint identification processing module 132 updates the fingerprint identification information of the selected non-contact application in the application registry according to the received command of updating fingerprint identification.

In step 309: if the fingerprint verification is passed, the fingerprint identification processing module 132 forwards the non-contact application selection command to the application distribution module 133; otherwise, the non-contact application selection command is prevented from being forwarded to the application distribution module 133.

In step 310: the application distribution module 133 selects the designated application to run in the embedded security element 130 according to the non-contact application selection command, and returns a message indicating that the application selection was successful to the fingerprint identification processing module 132.

In step 311: the fingerprint identification processing module 132 forwards the message indicating that the application selection was successful to the POS machine so that the POS machine executes a subsequent application interaction command with the non-contact application running on the embedded security element 130, thereby completing the payment process of the user swiping the card.

In the above embodiment supporting fingerprint verification, after the non-contact application interaction is completed, the fingerprint identification information of the non-contact application needs to be reset to a status in which the fingerprint verification is not executed, which can be completed in the following manner: as soon as the fingerprint identification processing module 132 receives the command to update the fingerprint identification information from the fingerprint verification processing module 122, a timer is activated, and when the timing is reached, the fingerprint identification processing module 132 needs to reset the fingerprint identification information of the non-contact application to a status in which the fingerprint verification is not performed.

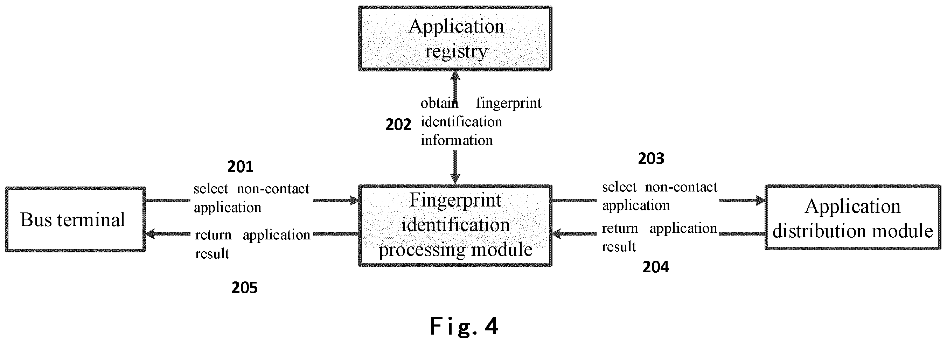

FIG. 4 is a flowchart of a mobile payment method according to another embodiment of the present disclosure. Exemplarily, in this embodiment, an application scene is involved in which the user uses a mobile phone payment application which does not support fingerprint verification to swipe the card on a bus terminal. For convenience of explanation, the mobile payment method of the present embodiment is implemented by means of the mobile payment terminal shown in FIG. 1. However, it should be noted that the method is not limited to being implemented by a device having a particular structure.

The process shown in FIG. 4 includes the following steps.

In step 401: the fingerprint identification processing module 132 receives a non-contact application selection command sent by the POS machine via the near field communication unit.

In step 402: the fingerprint identification processing module 132 obtains fingerprint identification information of the application from the application registry.

In step 403: the fingerprint identification processing module 132 determines the processing manner of the next step according to the fingerprint identification information. In this embodiment, since the selected non-contact application does not support fingerprint verification, the fingerprint identification processing module 132 forwards the non-contact application selection command to the application distribution module 133.

In step 404: the application distribution module 133 selects the designated application to run in the embedded security element 130 according to the non-contact application selection command, and returns a message indicating that the application selection was successful to the fingerprint identification processing module 132.

In step 405: the fingerprint identification processing module 132 forwards the message indicating that the application selection was successful to the POS machine so that the POS machine executes a subsequent application interaction command with the non-contact application running on the embedded security element 130, thereby completing the payment process of the user swiping the card.

While the above embodiments are all described based on a mobile phone of a physical eSE, these embodiments are also applicable to mobile payment terminals having a similar function to eSE (e.g., a mobile phone supporting HCE function).

The technical advantage of the present disclosure is that the fingerprint verification mode and the non-fingerprint verification mode can be seamlessly switched, thereby providing a good user experience to the non-fingerprint verification mode at the same time of ensuring the convenient and friendly user experience of the fingerprint payment.

While various exemplary embodiments have been shown and described, it will be understood by those skilled in the art that various changes can be made to these exemplary embodiments in terms of the form and detail without departing from the spirit and form of the concept of the present disclosure as defined by the appended claims.

## Claims

1. A mobile payment method, comprising the following steps:
executing a non-contact protocol initialization process between a mobile payment terminal and an external device by the mobile payment terminal;
receiving a selection command from the external device by the mobile payment terminal, the selection command designating a non-contact application;
determining, by the mobile payment terminal, whether the designated non-contact application supports a fingerprint verification mode;
determining, by the mobile payment terminal, whether the designated non-contact application has passed the fingerprint verification, if the fingerprint verification mode is supported; and
running the designated non-contact application by the mobile payment terminal to execute a payment operation, if the designated non-contact application has passed fingerprint verification or does not support the fingerprint verification mode,
wherein the execution of the non-contact protocol initialization process is independent of the execution of the fingerprint verification process.

2. The method according to claim 1, wherein the fingerprint verification process is executed before it is determined that the designated non-contact application supports the fingerprint verification mode.

3. The method according to claim 1, wherein the fingerprint verification process is executed after it is determined that the designated non-contact application supports the fingerprint verification mode.

4. The method according to claim 1, wherein the mobile payment terminal determines whether the designated non-contact application supports the fingerprint verification mode by accessing an application registry, and the application registry saves fingerprint identification information associated with the non-contact application residing in the mobile payment terminal, the fingerprint identification information comprising an identifier indicating whether the non-contact application supports the fingerprint verification mode and a status flag indicating whether the fingerprint verification is passed when the fingerprint verification mode is supported.

5. The method according to claim 4, wherein the step of determining by the mobile payment terminal whether the fingerprint verification is passed comprises:
a) reading the status flag;
b) if the status flag is a first set value, determining that the designated non-contact application has passed the fingerprint verification, and if the status flag is a second set value, determining that the designated non-contact application has not passed the fingerprint verification;
c) if the status flag is a third set value, executing a fingerprint verification process and repeating steps a) and b), wherein in the process of executing fingerprint verification, if the fingerprint verification is passed, the status flag is set at the first set value, otherwise it is set at the second set value; and
d) resetting the status flag at a third set value after the status flag has been set at the first set value or the second set value for a preset period of time.

6. A mobile payment terminal, comprising:
a near-field communication unit, configured to execute a non-contact protocol initialization process between the mobile payment terminal and an external device, and receive a selection command from the external device, the selection command designating a non-contact application running in the mobile payment terminal;
a fingerprint verification unit, configured to execute a fingerprint verification process; and
an embedded security element, which comprises a fingerprint triggering module configured to:
determine whether the designated non-contact application supports a fingerprint verification mode;
determine whether the designated non-contact application has passed the fingerprint verification, if the fingerprint verification mode is supported; and
instruct running the designated non-contact application in the mobile payment terminal to execute a payment operation, if the designated non-contact application has passed fingerprint verification or does not support the fingerprint verification mode,
wherein the execution of the non-contact protocol initialization process is independent of the execution of the fingerprint verification process.

7. The mobile payment terminal according to claim 6, wherein the mobile payment terminal is a mobile phone.

8. The mobile payment terminal according to claim 6, wherein the embedded security element further comprises an application registry that can be accessed by the fingerprint triggering module, wherein the application registry saves fingerprint identification information associated with the non-contact application residing in the mobile payment terminal, the fingerprint identification information comprising an identifier indicating whether the non-contact application supports the fingerprint verification mode and a status flag indicating whether the fingerprint verification is passed when the fingerprint verification mode is supported.

9. The mobile payment terminal according to claim 8, wherein the embedded security element further comprises a fingerprint identification processing module which is configured to update the status flag in the application registry based on a result of fingerprint verification of the fingerprint verification unit.

10. The mobile payment terminal according to claim 8, wherein the fingerprint triggering module is configured to determine whether the fingerprint verification is passed in the following manner:
a) reading the status flag;
b) if the status flag is a first set value, determining that the designated non-contact application has passed the fingerprint verification, and if the status flag is a second set value, determining that the designated non-contact application has not passed the fingerprint verification;
c) if the status flag is a third set value, executing a fingerprint verification process and repeating steps a) and b), wherein in the process of executing fingerprint verification, if the fingerprint verification is passed, the status flag is set at the first set value by the fingerprint identification processing module, otherwise it is set at the second set value by the fingerprint identification processing module; and
d) resetting the status flag at a third set value by the fingerprint identification processing module after the status flag has been set at the first set value or the second set value for a preset period of time.

11. The mobile payment terminal according to claim 6, wherein the designated non-contact application runs in the embedded security element.
